# FASCICULE DE BREVET EUROPEEN

(11) **EP 2 771 230 B1**
(45) Date de publication et mention de la délivrance du brevet: **16.12.2015**
(21) Numéro de dépôt: 12767071.9
(22) Date de dépôt: 13.09.2012
(51) Int. Cl.: B62D 35/00, B60R 19/18, B62D 25/08, B62D 35/02

(54) **BOUCLIER DE VEHICULE AUTOMOBILE INTEGRAND UN REFLECTEUR D'AIR ET VEHICULE CORRESPONDANT**
KRAFTFAHRZEUGSPRITZSCHUTZ MIT EINEM LUFTREFLEKTOR UND ENTSPRECHENDES FAHRZEUG
MOTOR VEHICLE SPLASH GUARD INCORPORATING AN AIR REFLECTOR AND CORRESPONDING VEHICLE

(30) Priorité: 27.10.2011 FR 1159741
(43) Date de publication de la demande: 03.09.2014
(73) Titulaire: Renault S.A.S., 92100 Boulogne-Billancourt (FR)
(72) Inventeur: LINGET, Jarno, F-78690 Les Essarts Le Roi (FR); VEUILLOT, Olivier, F-94450 Limeil Brevannes (FR)
(86) Numéro de dépôt international: PCT/FR2012/052052
(87) Numéro de publication internationale: WO 2013/060953

(56) Documents cités:
- EP-A1- 2 014 501
- DE-A1-102004 057 214
- GB-A- 2 440 441
- JP-A- 9 039 835

## Description

L'invention concerne un bouclier de véhicule automobile intégrant un déflecteur d'air. Le document GB 2 440 441 décrit un bouclier selon le préambule de la revendication 1.

Les boucliers des véhicules actuels sont réalisés en matière plastique par moulage. La partie centrale de ces boucliers présente un évidement destiné à recevoir une grille d'entrée d'air pour l'air acheminé jusqu'au radiateur.

Afin d'éviter les déperditions d'air au niveau de la grille d'entrée d'air, on dispose généralement un déflecteur d'air au niveau du bord inférieur de la grille d'air, ce déflecteur s'étendant sensiblement horizontalement.

Un tel déflecteur est une pièce rapportée qui est fabriquée séparément du bouclier et qui est ensuite indexée et fixée au bouclier avant le montage de celui-ci sur le châssis du véhicule.

Un déflecteur rapporté nécessite donc des opérations supplémentaires de fabrication, d'indexage et de fixation.

Un objectif de la présente invention est de proposer un bouclier de véhicule automobile et un déflecteur d'air dont la réalisation et le montage sont simplifiés et dont le coût de réalisation est faible.

A cet effet, la présente invention concerne un bouclier de véhicule automobile en matière plastique moulable comprenant une grille d'entrée d'air, ledit bouclier présentant un bord inférieur s'étendant dans un plan sensiblement horizontal en position d'utilisation du bouclier, le bouclier étant caractérisé en ce qu'il comprend une partie formant déflecteur d'air réalisée d'une pièce avec le bouclier et s'étendant dans un plan sensiblement horizontal en position d'utilisation du bouclier, sous la grille d'entrée d'air, une zone de liaison reliant cette partie formant déflecteur d'air au bord inférieur du bouclier. Selon l'invention, la zone de liaison est une zone de matière amincie formant une charnière de sorte que la partie formant déflecteur soit mobile entre une position de démoulage et une position d'utilisation dans laquelle elle s'étend dans un plan sensiblement horizontal en position d'utilisation du bouclier. La zone de liaison entre le bouclier et sa partie formant déflecteur est alors de préférence rectiligne pour faciliter la rotation de la partie formant déflecteur.

Cette caractéristique permet de simplifier la réalisation par moulage du bouclier selon l'invention. En effet, il est alors possible de réaliser le moulage de manière simple, avec la partie formant déflecteur d'air dans une position de moulage/démoulage sensiblement dans le prolongement de la face avant du bouclier, c'est-à-dire dans une position sensiblement verticale lorsque le bouclier présente la même orientation qu'en position d'utilisation sur le véhicule. Il suffit ensuite de faire pivoter la partie formant déflecteur jusqu'à sa position d'utilisation au montage du bouclier.

En outre, la partie formant déflecteur d'air comprend au moins deux moyens de fixation sur le bouclier et/ou sur la grille d'entrée d'air aptes à maintenir la partie formant déflecteur d'air en position d'utilisation. Ces moyens de fixation peuvent être situés latéralement, par exemple aux extrémités de la partie formant déflecteur d'air. Ils sont par exemple positionnés sur le bord avant de la partie formant déflecteur d'air en position d'utilisation (par rapport à l'orientation du véhicule en position d'utilisation du bouclier), par exemple de part et d'autre de la zone de liaison. Ces moyens de fixation sont par exemple des vis ou des rivets. Ces moyens de fixation permettent de faciliter les opérations de montage du bouclier par un maintien de la partie formant déflecteur dans sa position d'utilisation lors du montage, facilitant ainsi sa fixation sur d'autres éléments de structure du véhicule. Ces moyens de fixation constituent également des points de renfort de la liaison bouclier/partie formant déflecteur d'air, assurant une meilleure tenue de cette liaison notamment en cas de choc piéton.

En réalisant un déflecteur moulé d'une pièce avec le bouclier, on s'affranchit des contraintes d'indexation et de fixation des déflecteurs rapportés de l'art antérieur, permettant ainsi une réduction notable du temps de montage d'un bouclier et des coûts de fabrication. On réduit également le nombre de références produits à approvisionner en bord de ligne de montage, ce qui favorise la standardisation et concourt à la réduction des coûts.

La partie formant déflecteur d'air du bouclier selon l'invention sera avantageusement conformée pour former un absorbeur de choc piéton.

Les véhicules actuels présentent de plus en plus souvent des absorbeurs de choc piéton afin de limiter la gravité des blessures.

Notamment, afin de protéger le genou, un bouclier disposera par exemple d'une zone haute d'absorption de choc et d'une zone basse d'absorption de choc, conçues pour maintenir la verticalité de la jambe d'un piéton lors d'un choc. Le déflecteur du bouclier selon l'invention peut ainsi être conformé pour assurer la fonction d'un absorbeur de choc piéton situé au niveau de la zone basse d'absorption, ce qui permet d'éviter la réalisation d'un absorbeur de choc distinct et de réaliser un gain supplémentaire de matière et de temps de montage.

Afin d'obtenir la résistance au choc désirée, il est possible de faire varier l'épaisseur de la partie formant déflecteur et/ou de réaliser des nervures à la surface de la partie formant déflecteur, éventuellement entrecroisées, et/ou de réaliser la partie formant déflecteur de manière à ce qu'elle présente une section transversale non plane. La forme et/ou l'épaisseur de la partie formant déflecteur pourront aisément être déterminées par l'homme du métier afin d'assurer l'absorption de choc désirée en fonction du véhicule recevant le bouclier.

Bien qu'une zone de liaison discontinue entre la partie formant déflecteur d'air et le bouclier soit envisageable, la zone de liaison entre la partie formant déflecteur d'air et le bord inférieur du bouclier sera avantageusement continue sur toute sa longueur. Ceci permet d'une part d'éviter les fuites d'air au niveau de cette zone de liaison (sans ajout de pièce d'étanchéité supplémentaire), fuites préjudiciables au refroidissement du radiateur, et d'autre part d'éviter une rupture de la zone de liaison entre la partie formant déflecteur d'air et le bouclier, rupture préjudiciable à l'absorption du choc lorsque la partie formant déflecteur assure également une fonction d'absorbeur de choc. Cette zone de liaison sera de préférence aussi grande que le permet la forme du bouclier, afin d'améliorer l'étanchéité à l'air entre la partie formant déflecteur d'air et le bouclier, et également afin d'améliorer la tenue de la liaison entre la partie formant déflecteur d'air et le bouclier lorsque la partie formant déflecteur assure également une fonction d'absorbeur de choc.

La zone de liaison présente par exemple une longueur sensiblement égale à la totalité de la longueur de la partie formant déflecteur d'air, c'est-à-dire que la longueur de cette liaison correspond à au moins 80%, voire au moins 90% de la longueur du déflecteur d'air.

La partie formant déflecteur d'air du bouclier peut comprendre au moins deux, de préférence au moins quatre moyens de fixation conformés pour la fixation de la partie formant déflecteur sur un élément de structure du véhicule, en particulier sur un élément de structure transversal du véhicule, par exemple sur la traverse de berceau qui supporte le radiateur, ou sur un autre élément de structure transversal du véhicule. Ces moyens de fixation sont par exemple positionnés sur le bord arrière de la partie formant déflecteur d'air dans sa position d'utilisation (par rapport à l'orientation du véhicule en position d'utilisation du bouclier), et seront de préférence répartis sur toute la longueur de la partie formant déflecteur d'air. Ces moyens de fixation sont par exemple des vis ou des rivets.

La partie formant déflecteur d'air peut s'étendre sur sensiblement toute la largeur de la grille d'entrée d'air, c'est-à-dire sur au moins 80%, voire au moins 90% de la largeur de la grille d'entrée d'air, afin d'assurer un guidage optimal de l'air entrant par la grille d'air vers le radiateur.

L'invention concerne également un véhicule automobile comportant un bouclier selon l'invention.

L'invention concerne encore un procédé de fabrication et de montage sur un véhicule automobile d'un bouclier ayant tout ou partie des caractéristiques précédentes, le procédé comprenant les étapes suivantes :
- moulage du bouclier, la partie formant déflecteur étant dans la position de moulage orientée sensiblement verticalement en référence à la position d'utilisation du bouclier sur le véhicule,
- démoulage du bouclier, la partie formant déflecteur demeurant dans la position de moulage,
- pivotement autour de la zone de liaison de la partie formant déflecteur depuis la position de moulage jusqu'à la position d'utilisation, notamment d'un angle d'environ 90°,
- fixation de la partie formant déflecteur via les moyens de fixation, pour la maintenir dans la position d'utilisation,
- fixation du bouclier et de sa partie formant déflecteur dans la position d'utilisation, sur la structure du véhicule.

Un mode de réalisation de l'invention est à présent décrit à titre d'exemple non limitatif de l'invention et en référence aux dessins annexés sur lesquels :
- La figure 1 représente une vue en perspective de dessous d'un bouclier selon l'invention ;
- La figure 2 représente une vue en coupe longitudinale du bouclier au niveau des moyens de fixation sur la structure du véhicule, la partie formant déflecteur d'air étant en position de démoulage ;
- La figure 3 représente une vue en coupe longitudinale du bouclier au niveau des moyens de fixation sur la structure du véhicule, la partie formant déflecteur d'air étant en position d'utilisation ;
- La figure 4 représente une vue en coupe longitudinale du bouclier au niveau de moyens de fixation sur le bouclier/la grille d'entrée d'air, la partie formant déflecteur d'air étant en position d'utilisation.

Dans la présente description, les termes avant, arrière, supérieur, inférieur, dessus, dessous font référence aux directions avant et arrière du véhicule, lorsque le bouclier est monté sur le véhicule (correspondant à la position d'utilisation du bouclier). Les axes X, Y, Z, correspondent respectivement aux axes longitudinal (d'avant en arrière), transversal et vertical du véhicule.

Les figures représentent un bouclier 10 de véhicule automobile en plastique moulable comprenant une grille d'entrée d'air 20.

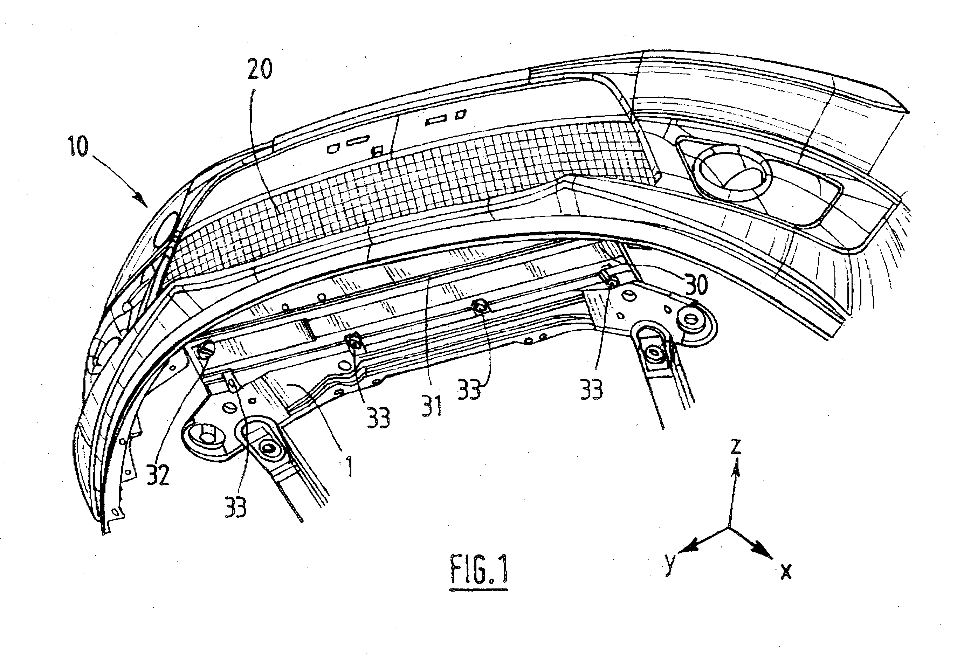

Le bouclier 10 présente un bord inférieur 11 s'étendant dans un plan sensiblement horizontal en position d'utilisation du bouclier, tel que représenté sur les figures 1, 3, 4. Dans l'exemple, ce bord inférieur 11 est rectiligne et s'étend sensiblement suivant la direction transversale du véhicule, lorsque le bouclier est en position d'utilisation.

Le bouclier 10 présente également un évidement central 12 dans lequel est logée la grille d'entrée d'air 20.

Le bouclier 10 comprend en outre une partie formant déflecteur d'air 30 réalisée d'une pièce avec le bouclier 10.

Cette partie formant déflecteur d'air 30 est reliée au bord inférieur 11 du bouclier 10 et s'étend dans un plan sensiblement horizontal en position d'utilisation du bouclier 10, sous la grille d'entrée d'air 20.

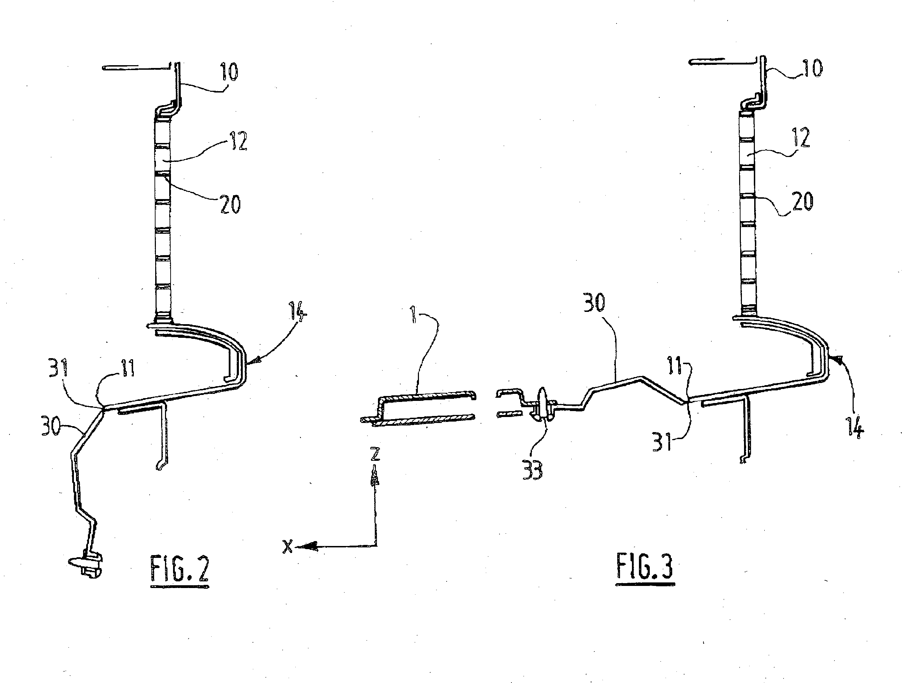

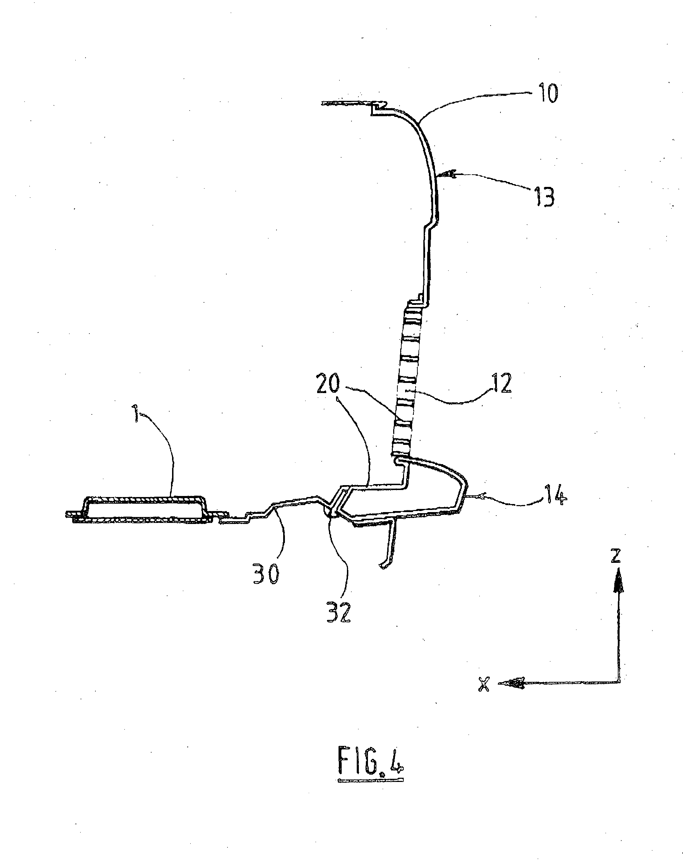

Le bouclier 10 représenté présente dans sa partie supérieure, une zone haute 13 d'absorption des chocs piétons et petits chocs (figure 4). Le bouclier 10 présente également dans sa partie inférieure, une zone basse 14 d'absorption pour les chocs piétons (figures 2-4).

Dans l'exemple représenté sur les figures, la partie formant déflecteur d'air 30 est également conformée pour former un absorbeur (bas) de choc piéton. A cet effet, sa forme et/ou son épaisseur sont déterminées afin d'assurer l'absorption de choc désirée en fonction du véhicule recevant le bouclier 10.

Par exemple, la partie formant déflecteur d'air 30 pourra présenter une section transversale (correspondant à une section suivant la direction longitudinale du véhicule en position d'utilisation du bouclier) non plane, tel que visible sur les figures 2 à 4. Il est également possible de prévoir des nervures de rigidification sur la face supérieure de la partie formant déflecteur (par rapport à sa position d'utilisation). Ces nervures peuvent par exemple être orientées selon la direction transversale du véhicule (en Y), selon la direction longitudinale du véhicule (en X) ou selon des directions obliques. Ces nervures peuvent également être entrecroisées.

La partie formant déflecteur d'air 30 est reliée au bord inférieur 11 du bouclier par une zone de liaison 31 constituée par une zone de matière amincie formant charnière (figures 1-3). Cette charnière 31 est rectiligne et continue sur toute sa longueur. Dans une variante non représentée, cette charnière pourrait être réalisée de manière discontinue (un joint devrait toutefois alors être ajouté pour éviter les fuites d'air au niveau de la charnière).

La longueur de la charnière 31 correspond sensiblement à la totalité de la longueur de la partie formant déflecteur d'air 30, c'est-àdire correspond à au moins 95% de la longueur de la partie formant déflecteur d'air 30.

Grâce à cette charnière 31, la partie formant déflecteur d'air 30 est mobile entre une position de démoulage, sensiblement verticale dans l'exemple, tel que représenté figure 2, et une position d'utilisation représentée figure 3, dans laquelle elle s'étend dans un plan sensiblement horizontal en position d'utilisation du bouclier.

Par sensiblement vertical ou horizontal, on entend des plans s'étendant verticalement ou horizontalement à plus ou moins 20° près, voire à plus ou moins 10° près.

Cette caractéristique permet de simplifier la réalisation par moulage du bouclier selon l'invention. En effet, il est alors possible de réaliser le moulage du bouclier et de sa partie formant déflecteur d'air au moyen de deux demi-moules.

La partie formant déflecteur d'air 30 représentée s'étend sur sensiblement toute la largeur de la grille d'entrée d'air 20, soit sur au moins 95% de la largeur de la grille d'entrée d'air 20, afin d'améliorer le guidage de l'air entrant par la grille d'air 20 vers le radiateur.

Divers moyens de fixation sont en outre prévus notamment pour faciliter le montage et la fixation de la partie formant déflecteur d'air 30 dans sa position d'utilisation.

Dans l'exemple représenté, la partie formant déflecteur d'air 30 comprend deux moyens de fixation 32 (dont un seul est visible sur la figure 1) sur la grille d'entrée d'air 20 aptes à maintenir la partie formant déflecteur d'air dans sa position d'utilisation. Ces moyens de fixation 32, sont situés latéralement, de part et d'autre de la zone de liaison formant charnière 31, à proximité du bord avant de la partie formant déflecteur d'air 30. L'un de ces moyens de fixation 32 est représenté en coupe sur la figure 4. Il s'agit de rivets ou de vis. La partie formant déflecteur d'air 30 comprend également quatre moyens de fixation 33 conformés pour la fixation de la partie formant déflecteur 30 sur un élément de structure du véhicule, une traverse de berceau 1 dans l'exemple. Ces moyens de fixation 33 sont des vis ou des rivets coopérant avec des orifices correspondants de la traverse de berceau 1.

La fabrication et le montage du bouclier selon l'invention sont réalisés de la manière suivante.

Deux demi-moules (non représentés) sont utilisés pour la fabrication du bouclier en matière plastique. Dans la position de moulage, la partie formant déflecteur 30 est disposée dans sa position de moulage qui est illustrée à la figure 2. Dans cette position, la partie formant déflecteur 30 est sensiblement verticale si l'on considère le bouclier en référence à sa position définitive d'utilisation sur le véhicule. Autrement dit, la partie formant déflecteur 30 est sensiblement parallèle au plan de l'ouverture destinée à accueillir la grille d'entrée d'air 20. Les termes « sensiblement vertical » ou « sensiblement parallèle » indique qu'un angle réduit est toutefois envisageable entre la direction verticale et le plan de l'ouverture, typiquement un angle inférieur à 30°.

Au démoulage, les deux demi-moules sont séparés vers l'avant et l'arrière, par rapport à l'axe longitudinal du véhicule, la partie formant déflecteur est alors orientée sensiblement verticalement, tel que représenté sur la figure 2.

La partie formant déflecteur 30 est ensuite pivotée vers le haut (de 90° environ dans l'exemple) jusqu'à sa position d'utilisation représentée figures 1, 3 et 4.

L'aspect essentiel de l'invention réside dans le fait que le bouclier est globalement plat lors du moulage (à l'exception de certaines zones protubérantes telles que la zone basse 14 de choc piéton, fig. 2, 3), et qu'une fois démoulé, une partie inférieure du bouclier est repliée autour d'une zone de liaison, sensiblement à angle droit, pour se disposer dans une position d'utilisation. L'angle de pliage est indiqué « sensiblement à angle droit ». Il faut comprendre que cet angle est compris entre 60 et 120°. Le procédé de l'invention peut prévoir une étape de préparation au pliage, impliquant par exemple un chauffage local de la zone de liaison 32 avant pivotement de la partie formant déflecteur 30.

La partie formant déflecteur 30 est alors fixée au bouclier ou à la grille d'entrée d'air 20 (après fixation de cette dernière sur le bouclier) grâce aux moyens de fixation 32, tel que représenté sur la figure 4. La partie formant déflecteur 30 est alors maintenue dans sa position d'utilisation.

Le bouclier 10 peut ensuite être monté sur la structure du véhicule, la partie formant déflecteur d'air 30 étant assemblée à un élément de structure transversal du véhicule, par exemple la traverse de berceau 1, grâce aux moyens de fixation 33. De préférence, la partie formant déflecteur d'air 30 est fixée sur la face supérieure de l'élément de structure transversal du véhicule.

## Revendications

1. Bouclier (10) de véhicule automobile en matière plastique moulable comprenant une grille d'entrée d'air (20), ledit bouclier présentant un bord inférieur (11) s'étendant dans un plan sensiblement horizontal en position d'utilisation du bouclier, le bouclier comprenant une partie formant déflecteur d'air (30) réalisée d'une pièce avec le bouclier (10) et s'étendant dans un plan sensiblement horizontal en position d'utilisation du bouclier (10), sous la grille d'entrée d'air (20), une zone de liaison (31) reliant cette partie formant déflecteur d'air (30) au bord inférieur (11) du bouclier, **caractérisé en ce que** la zone de liaison (31) est une zone de matière amincie formant une charnière, de sorte que la partie formant déflecteur d'air (30) soit mobile entre une position de démoulage et une position d'utilisation dans laquelle elle s'étend dans un plan sensiblement horizontal en position d'utilisation du bouclier, et **en ce que** la partie formant déflecteur d'air (30) comprend au moins deux moyens de fixation (32) sur le bouclier (11) et/ou sur la grille d'entrée d'air (20) aptes à maintenir la partie formant déflecteur d'air (30) en position d'utilisation.

2. Bouclier selon la revendication 1, **caractérisé en ce que** la partie formant déflecteur d'air (30) est conformée pour former un absorbeur de choc piéton.

3. Bouclier selon l'une des revendications 1 ou 2, **caractérisé en ce que** la zone de liaison (31) entre la partie formant déflecteur d'air (30) et le bord inférieur (11) du bouclier est continue sur toute sa longueur.

4. Bouclier selon l'une des revendications 1 à 3, **caractérisé en ce que** la zone de liaison (31) présente une longueur sensiblement égale à la totalité de la longueur de la partie formant déflecteur d'air (30).

5. Bouclier selon l'une des revendications 1 à 4, **caractérisé en ce que** la partie formant déflecteur d'air (30) comprend au moins deux, de préférence au moins quatre, moyens de fixation (33) conformés pour la fixation de la partie formant déflecteur d'air (30) sur un élément de structure (1) du véhicule.

6. Bouclier selon l'une des revendications 1 à 5, **caractérisé en ce que** la partie formant déflecteur d'air (30) s'étend sur sensiblement toute la largeur de la grille d'entrée d'air (20).

7. Véhicule automobile comportant un bouclier (10) selon l'une des revendications précédentes.

8. Procédé de fabrication et de montage sur un véhicule automobile d'un bouclier selon l'une quelconque des revendications 1 à 6, **caractérisé en ce qu'**il comprend les étapes suivantes :
- moulage du bouclier, la partie formant déflecteur (30) étant dans la position de moulage orientée sensiblement verticalement en référence à la position d'utilisation du bouclier sur le véhicule,
- démoulage du bouclier,
- pivotement autour de la zone de liaison (31) de la partie formant déflecteur (30) depuis la position de moulage jusqu'à la position d'utilisation, notamment d'un angle d'environ 90°,
- fixation de la partie formant déflecteur via les moyens de fixation (32), pour la maintenir dans la position d'utilisation,
- fixation du bouclier et de sa partie formant déflecteur (30) dans la position d'utilisation, sur la structure du véhicule.

## Patentansprüche

1. Kraftfahrzeugspritzschutz (10) aus gießfähigem Kunststoffmaterial, umfassend ein Lufteintrittsgitter (20), wobei der Spritzschutz einen unteren Rand (11) aufweist, welcher sich in Einsatzposition des Spritzschutzes in einer im Wesentlichen horizontalen Ebene erstreckt, wobei der Spritzschutz einen, einen Luftabweiser (30) bildenden Abschnitt umfasst, welcher aus einem Stück mit dem Spritzschutz (10) ausgeführt ist und sich in Einsatzposition des Spritzschutzes (10) in einer im Wesentlichen horizontalen Ebene unter dem Lufteintrittsgitter (20) erstreckt, wobei eine Verbindungszone (31) diesen den Luftabweiser (30) bildenden Abschnitt mit dem unteren Rand (11) des Spritzschutzes verbindet, **dadurch gekennzeichnet, dass** die Verbindungszone (31) eine Zone mit dünner gewordenem Material ist, welche ein Gelenk bildet, derartig, dass der den Luftabweiser (30) bildende Abschnitt zwischen einer Position zum Entformen und einer Position für den Einsatz, in welcher er sich in Einsatzposition des Spritzschutzes in einer im Wesentlichen horizontalen Ebene erstreckt, beweglich ist, und dass der den Luftabweiser (30) bildende Abschnitt mindestens zwei Mittel zur Befestigung (32) am Spritzschutz (11) und/oder am Lufteintrittsgitter (20) umfasst, welche geeignet sind, den den Luftabweiser (30) bildenden Abschnitt in Position für den Einsatz zu halten.

2. Spritzschutz nach Anspruch 1, **dadurch gekennzeichnet, dass** der den Luftabweiser (30) bildende Abschnitt ausgebildet ist, um einen Dämpfer für einen Fußgängeraufprall zu bilden.

3. Spritzschutz nach einem der Ansprüche 1 oder 2, **dadurch gekennzeichnet, dass** die Verbindungszone (31) zwischen dem den Luftabweiser (30) bildenden Abschnitt und dem unteren Rand (11) des Spritzschutzes über ihre gesamte Länge stetig ist.

4. Spritzschutz nach einem der Ansprüche 1 bis 3, **dadurch gekennzeichnet, dass** die Verbindungszone (31) eine Länge aufweist, die im Wesentlichen gleich der Gesamtlänge des den Luftabweiser (30) bildenden Abschnitts ist.

5. Spritzschutz nach einem der Ansprüche 1 bis 4, **dadurch gekennzeichnet, dass** der den Luftabweiser (30) bildende Abschnitt mindestens zwei, insbesondere mindestens vier, Befestigungsmittel (33) aufweist, welche für die Befestigung des den Luftabweiser (30) bildenden Abschnitts an einem Strukturelement (1) des Fahrzeugs ausgelegt sind.

6. Spritzschutz nach einem der Ansprüche 1 bis 5, **dadurch gekennzeichnet, dass** der den Luftabweiser (30) bildende Abschnitt sich im Wesentlichen über die ganze Breite des Lufteintrittsgitters (20) erstreckt.

7. Kraftfahrzeug, umfassend einen Spritzschutz (10) nach einem der vorhergehenden Ansprüche.

8. Verfahren zur Herstellung und Montage eines Spritzschutzes an einem Kraftfahrzeug nach einem der Ansprüche 1 bis 6, **dadurch gekennzeichnet, dass** es die folgenden Schritte umfasst:
- Gießen des Spritzschutzes, wobei der den Luftabweiser (30) bildende Abschnitt sich in der Position zum Gießen befindet, welche in Bezug auf die Einsatzposition des Spritzschutzes am Fahrzeug im Wesentlichen senkrecht ausgerichtet ist,
- Entformen des Spritzschutzes,
- Schwenken des den Luftabweiser (30) bildenden Abschnitts um die Verbindungszone (31) aus der Position zum Gießen in die Position des Einsatzes, insbesondere um einen Winkel von ungefähr 90°,
- Befestigen des den Luftabweiser bildenden Abschnitts mittels der Befestigungsmittel (32), um ihn in der Einsatzposition zu halten,
- Befestigen des Spritzschutzes und seines den Luftabweiser (30) bildenden Abschnitts an der Struktur des Fahrzeugs in der Einsatzposition.

## Claims

1. Motor vehicle bumper (10) made of mouldable plastic and comprising an air intake grille (20), the said bumper having a lower edge (11) extending in a substantially horizontal plane when the bumper is in the use position, the bumper comprising an air deflector-forming portion (30) produced in one piece with the bumper (10) and extending, below the air intake grille (20), in a substantially horizontal plane when the bumper (10) is in the use position, and a connection region (31) joining this air deflector-forming portion (30) to the lower edge (11) of the bumper, **characterized in that** the connection region (31) is a region of thinned-out material forming a hinge, with the result that the air deflector-forming portion (30) is movable between a demoulding position and a use position in which it extends in a substantially horizontal plane when the bumper is in the use position, and **in that** the air deflector-forming portion (30) comprises at least two means (32) for attachment to the bumper (11) and/or to the air intake grille (20), these means being able to retain the air deflector-forming portion (30) in the use position.

2. Bumper according to Claim 1, **characterized in that** the air deflector-forming portion (30) is configured to form a pedestrian impact absorber.

3. Bumper according to either of Claims 1 and 2, **characterized in that** the connection region (31) between the air deflector-forming portion (30) and the lower edge (11) of the bumper is continuous over its entire length.

4. Bumper according to one of Claims 1 to 3, **characterized in that** the connection region (31) has a length which is substantially equal to the total length of the air deflector-forming portion (30).

5. Bumper according to one of Claims 1 to 4, **characterized in that** the air deflector-forming portion (30) comprises at least two, preferably at least four, attachment means (33) configured to attach the air deflector-forming portion (30) to a structural element (1) of the vehicle.

6. Bumper according to one of Claims 1 to 5, **characterized in that** the air deflector-forming portion (30) extends over substantially the entire width of the air intake grille (20).

7. Motor vehicle comprising a bumper (10) according to one of the preceding claims.

8. Method for manufacturing a bumper according to any one of Claims 1 to 6 and for mounting it on a motor vehicle, **characterized in that** it comprises the following steps:
- moulding the bumper, the deflector-forming portion (30) being in the moulding position in which it is oriented substantially vertically with reference to the use position of the bumper on the vehicle,
- demoulding the bumper,
- pivoting about the connection region (31) the deflector-forming portion (30) from the moulding position to the use position, in particular by an angle of approximately 90°,
- attaching the deflector-forming portion via the attachment means (32) to retain it in the use position,
- attaching the bumper and its deflector-forming portion (30) in the use position to the structure of the vehicle.
